(19) Europäisches Patentamt
European Patent Office
Office européen des brevets

(11) **EP 4 093 213 B1**

(12) **EUROPEAN PATENT SPECIFICATION**

(45) Date of publication and mention
of the grant of the patent:
**13.08.2025   Bulletin 2025/33**

(21) Application number: **21702197.1**

(22) Date of filing: **22.01.2021**

(51) International Patent Classification (IPC):
**A23J 1/10** (2006.01)          **A23L 33/17** (2016.01)

(52) Cooperative Patent Classification (CPC):
**A23L 33/17; A23J 1/10**

(86) International application number:
**PCT/EP2021/051507**

(87) International publication number:
**WO 2021/148638 (29.07.2021 Gazette 2021/30)**

(54) **COMPOSITION COMPRISING ELASTIN AND ITS USE**

ELASTIN ENTHALTENDE ZUSAMMENSETZUNG UND IHRE VERWENDUNG

COMPOSITION COMPRENANT DE L'ÉLASTINE ET SON UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **24.01.2020   EP 20153704**

(43) Date of publication of application:
**30.11.2022   Bulletin 2022/48**

(73) Proprietor: **Tessenderlo Group NV**
**1050 Brussel (BE)**

(72) Inventors:
• **VAN KELECOM, Guy, Joseph, Adelin**
**1050 Brussel (BE)**
• **BELMANS, Marc**
**1050 Brussel (BE)**
• **ROGIERS, Joeri**
**1050 Brussel (BE)**
• **FILLIERES, Romain**
**27200 Vernon (FR)**
• **MAERTENS, Faye**
**3290 Schaffen (BE)**

(74) Representative: **Hoyng Rokh Monegier B.V.**
**Rembrandt Tower, 30th Floor**
**Amstelplein 1**
**1096 HA Amsterdam (NL)**

(56) References cited:
EP-A1- 2 575 496          EP-B1- 2 575 496
CN-A- 106 381 323          CN-A- 110 140 844
US-A1- 2009 028 817          US-A1- 2016 303 021

• **J KANTA, V HUDEC, R BÁRTA, V VELEBNÝ:**
**"Elastin powder produced for cosmetic
purposes does not affect formation of
granulation tissue", vol. 32, no. 4, 1989, pages
403 - 406, Retrieved from the Internet
<URL:https://www.ncbi.nlm.nih.gov/pubmed/
2637487> [retrieved on 20240822]**

## Description

### TECHNICAL FIELD

The present invention relates to an animal skin residue composition comprising elastin, said composition having an improved oil and water binding capacity and improved emulsification properties. The composition of the present invention is specifically suitable for use in food and pet food applications as protein supplement or as replacement of specific texturizing ingredients.

### BACKGROUND OF THE INVENTION

Functional ingredients for use in food and pet food are widely used for providing the right properties to said food and pet food, such as texture, cooking stability, cutting properties (eg sliceability) etc. Important parameters to provide texture are water binding capacity, oil binding capacity, emulsification properties and so on. Different ingredients are used nowadays, each with their own advantages and drawbacks. For example blood plasma is widely used as an ingredient in food applications such as sausages, cooking sausages and the like. Several attempts have been made in the art to find replacer ingredients for blood plasma. Other existing texturizers contain still high amounts of collagen in order to provide the desired functional properties to food and pet food applications. EP 2 575 496 is directed to a method for preparing a collaaen powder and to collagen powder that can be used for the preparation of a satiety inducing food product. J KANTA, V HUDEC, R BARTA, V VELEBNY, "Elastin powder produced for cosmetic purposes does not affect formation of granulation tissue", vol. 32, no. 4, 1989, pages 403-406 discloses that a suspension of elastin powder that is produced for cosmetic purposes has been applied on open skin wounds made in rats. Elastin particles (diameter smaller than 0.1 mm) prepared by extraction of bovine nuchal ligament with alkali had no effect on wet weight and dry weight of granulation tissue formed in the wound within 6 days.

Currently, animal skin residue and in particular pig skin residue, which is the remaining of the animal skin after collagen extraction for gelatin production, is a byproduct of the gelatin production process. This product usually sold as an ingredient for mere protein enrichment. The current invention has found ways to improve and upgrade this product.

The present invention aims at providing a composition having improved functional properties and being suitable to provide e.g. right texture to food or pet food applications on its own or in combination with other texturizing ingredients such as blood plasma.

### SUMMARY OF THE INVENTION

The present invention is defined in the appended claims.

In a first aspect, the present invention relates to an animal skin residue composition comprising elastin, characterized in that it has:

    a. A protein content of at least 60wt%
    b. 90V% of the composition has a particle size of less than about 310$\mu$m and comprises 3,5wt% or less of hydroxyproline.

In a further aspect, the present invention relates to a process for producing a composition according to the present invention, said process comprising the steps of:

    a. Providing an aqueous slurry of animal skin residue material, and
    b. Drying the animal skin residue, and
    c. Grinding the dried animal skin residue, and
    d. Optionally sieving and
    e. Collecting the composition.

In a further aspect, the present invention relates to a composition comprising elastin, characterized in that:

    a. It has a protein content of at least 60wt%
    b. 90V% of the composition has a particle size of less than about 310$\mu$m and comprises 3,5wt% or less of hydroxyproline,
    c. The composition is prepared by drying and grinding an animal skin residue during 15minutes or less, while the animal skin residue remains at a temperature of 100°C or less.

In a further aspect, the present invention relates to a food, pet food or pharmaceutical application comprising the composition of the present invention and further food, pet food or pharmaceutical ingredients.

In a further aspect, the present invention relates to the use of the composition of the present invention as blood plasma replacer ingredient in food applications or pet food applications.

## DETAILED DESCRIPTION

In a first aspect, the present invention relates to an animal skin residue composition comprising elastin, characterized in that:

a. A protein content of at least 60wt%

b. 90V% of the composition has a particle size of less than about 310$\mu$m and comprises 3,5wt% or less of hydroxyproline.

Elastin is an insoluble protein found in the skin of animals. Preferably the elastin is obtained from the skin of mammals, more preferably from pigs. The composition of the present invention is an animal skin residue composition, preferably pigskin residue composition, as it results from processing animal skin, preferably pigskin, preferably after at least a partial extraction of the collagen from the skin, said collagen typically being used to produce gelatin and/or collagen hydrolysate (i.e. further hydrolysis of gelatin).

The composition of the present invention is characterized in that it comprises 3,5wt% or less of the amino acid hydroxyproline. Preferably the composition of the present invention comprises from about 0,2wt% to about 3,5wt%, more preferably from about 0,2 to about 2wt%, even more preferably from about 0,2 to about 1,5wt%, yet even more preferably from about 0,2 to about 1,5wt%, yet even more preferably from about 0,2 to about 1wt%, yet even more preferably from about 0,5 to about 1wt% of hydroxyproline.

Preferably further the composition of the present invention has a pH of from 4 to 5,5.

The composition of the present invention preferably has a protein content of at least 65wt%, more preferably at least 70wt%, even more preferably at least 75wt%, yet even more preferably at least 80wt%, yet even more preferably at least 85wt%, yet even more preferably at least 90wt%, yet even more preferably at least 95wt%, such as from 95wt% to 99wt%.

The composition of the present invention is characterized in that 90V% (Volume %) has a particle size of less than about 310$\mu$m, further preferably in that 75V% has a particle size of less than about 210$\mu$m, further preferably in that 50V% has a particles size of less than about 140$\mu$m, further more preferably in that 25V% has a particle size of less than about 80$\mu$m, further even more preferably in that 10V% has a particle size of less than about 50$\mu$m.

The particle size is measured with a Beckman Coulter laser diffraction particles size analyzer. The measurement is made on dry product as is typically done in the art.

Preferably further, the composition of the present invention is characterized by its wet particle size. Wet particle size is measured according to the method described below. Preferably the wet particle size distribution of the composition of the present invention is as follows: 90V% of the composition has a particle size of less than about 450$\mu$m, more preferably 75V% has a particle size of less than about 280$\mu$m, even more preferably 50V% has a particle size of less than about 165$\mu$m, even more preferably 25V% has a particle size of less than about 95$\mu$m, yet even more preferably 10V% has a particle size of less than about 55$\mu$m.

The composition of the present invention has a moisture content of from 2 to 15wt%, preferably from 3 to 14wt%, more preferably from 3 to 12wt%, even more preferably from 3 to 10wt%, yet even more preferably from 3 to 8wt%, yet even more preferably from 3 to 6wt%, yet even more preferably from 3 to 5wt%.

Further preferably, the composition of the present invention has an ash content of about 2wt% or less.

Further preferably, the composition of the present invention has a collagen content of 12wt% or less, 10wt% or less, preferably from 2 to 8wt%, more preferably from 2,5 to 8wt%, even more preferably from 3 to 8wt%, even more preferably from 3,5 to 8wt%, yet even more preferably from 4 to 8wt%, yet even more preferably from 5 to 8wt% and yet even more preferably from 6 to 8wt%. This further improves the functional properties of the present composition. It has been found that despite the low amount of collagen in the composition of the present invention, compared to existing texturizing compositions, the composition of the present invention still has advantageous functional properties such as described herein.

The water binding capacity of the present composition is advantageous in that the product can easily be incorporated in several food and pet food applications. Food applications are for example meat preparations such as sausages, more particularly cooking sausages, liver patés, ham for example. Pet food applications are wet pet food, extruded wet pet food products. Water binding capacity means the amount of water that the product can hold, even after a heating step and translates into amongst other things following parameters in food and pet food applications: less water loss after after a heat treatment (eg cooking step), less/reduced syneresis during conservation.

EP 4 093 213 B1

The composition of the present invention has a water binding capacity measured at 20°C, according to the method described below, of from 200 to 500%, preferably of from 210 to 460%, more preferably of 220 to 460%, preferably of from 230 to 460%, more preferably of 240 to 460%, even more preferably of 250 to 460%, yet even more preferably of 260 to 460%, yet even more preferably of 270 to 460%, yet even more preferably of 280 to 460%, yet even more preferably of 290 to 460%, yet even more preferably of 300 to 460%, yet even more preferably of 310 to 460%, yet even more preferably of 320 to 460%, yet even more preferably of 330 to 460%, yet even more preferably of 340 to 460%, yet even more preferably of 350 to 460%, yet even more preferably of 360 to 460%, yet even more preferably of 370 to 460%, yet even more preferably of 380 to 460%, yet even more preferably of 390 to 460%, yet even more preferably of 400 to 460%, yet even more preferably of 410 to 460%, yet even more preferably of 420 to 460%, yet even more preferably of 430 to 460%, yet even more preferably of 440 to 460%, yet even more preferably of 450 to 460%.

Further preferably, the composition of the present invention also has a water binding capacity measured at 76°C, according to the method described below, of from 200 to 450%, preferably of from 210 to 440%, more preferably of 220 to 440%, even more preferably of 230 to 440%, yet even more preferably of 240 to 440%, yet even more preferably of 250 to 440%, yet even more preferably of 260 to 440%, yet even more preferably of 270 to 440%, yet even more preferably of 280 to 440%, yet even more preferably of 290 to 440%, yet even more preferably of 300 to 440%, yet even more preferably of 310 to 440%, yet even more preferably of 320 to 440%, yet even more preferably of 330 to 440%, yet even more preferably of 340 to 440%, yet even more preferably of 350 to 440%, yet even more preferably of 360 to 440%, yet even more preferably of 370 to 440%, yet even more preferably of 380 to 440%, yet even more preferably of 390 to 440%, yet even more preferably of 400 to 440%, yet even more preferably of 410 to 440%, yet even more preferably of 420 to 440%, yet even more preferably of 430 to 440%.

Further, preferably the composition of the present invention has an oil binding capacity measured at 20°C, according to the method described below, of 110 to 350%, more preferably of 115 to 340%, even more preferably from 120 to 330%, even more preferably of 130 to 330%, even more preferably of 140 to 330%, even more preferably of 150 to 330%, even more preferably of 160 to 330%, even more preferably of 160 to 330%, even more preferably of 170 to 330%, even more preferably of 180 to 330%, even more preferably of 190 to 330%, even more preferably of 200 to 330%, even more preferably of 210 to 330%, even more preferably of 220 to 330%, even more preferably of 230 to 330%, even more preferably of 240 to 330%, even more preferably of 250 to 330%, even more preferably of 260 to 330%, even more preferably of 270 to 320%, even more preferably of 280 to 320%, even more preferably of 290 to 320%, even more preferably of 300 to 320%.

Further, preferably the composition of the present invention has an oil binding capacity measured at 76°C, according to the method described below, of 105 to 320%, more preferably of 110 to 320%, even more preferably from 115 to 320%, even more preferably of 120 to 310%, even more preferably of 130 to 310%, even more preferably of 140 to 310%, even more preferably from 150 to 310%, even more preferably of 160 to 310%, even more preferably of 170 to 310%, even more preferably of 180 to 310%, even more preferably of 190 to 310%, even more preferably of 200 to 310%, even more preferably of 210 to 310%, even more preferably of 220 to 310%, even more preferably of 230 to 310%, even more preferably of 240 to 310%, even more preferably of 250 to 310%, even more preferably of 260 to 310%, even more preferably of 270 to 310%, even more preferably of 280 to 310%, even more preferably of 290 to 310%, even more preferably of 300 to 310%.

Further, preferably the composition of the present invention is characterized in that it has an emulsification capacity of from 60 to 95%, more preferably from 65 to about 99%, more preferably from 70 to 98%, even more preferably from 75 to 97%, yet even more preferably from 77 to 96%, yet even more preferably from 78 to 95%, yet even more preferably from 80 to 94%, yet even more preferably from 82 to 93%, yet even more preferably from 85 to 93%.

In a further aspect, the present invention relates to a process to produce the composition of the present invention, said process comprises the steps of:

    a. Providing an aqueous slurry of animal skin residue, and
    b. Drying the animal skin residue, and
    c. Grinding the dried animal skin residue, and
    d. Optionally sieving and
    e. Collecting the composition.

As mentioned above, the animal skin residue, preferably pigskin residue, is the residual skin of the animals that is obtained after extraction of collagen has been done, typically in a gelatin producing plant. The animal skin of step a. of the process of the present invention may be obtained after one or more collagen extraction cycles. For example, the animal skin may be obtained after two, three or four collagen extraction cycles. This will influence the collagen content of the animal skin residue and therefore the collagen content of the composition obtainable by the process of the present invention. Preferably, the aqueous slurry of animal skin residue is obtained after separating fat and part of the water from the animal skins after collagen extraction. Separating fat and part of the water may be done using a two phase decanter, preferably using a three phase decanter.

The aqueous slurry of step a. comprises from 50 to 80wt% of water, preferably from 60 to 70wt% of water. Before the decanter, a pasteurization step may be done.

Preferably before entering the dryer, the aqueous slurry of animal skin residue is passed in a backmixer where some dry product can be added. The amount of dry product to be added depends amongst other things on the moisture content of the animal skin residue which can be adapted to improve the performance of the drying equipment.

The process of the present invention is further characterized in that the drying is performed during 15 minutes or less, preferably during 10 minutes or less, more preferably during 8 minutes or less, even more preferably during 5 minutes or less, even more preferably during 1 minute or less, yet even more preferably during 30 seconds or less, yet even more preferably during 25 seconds or less, yet even more preferably during 20 seconds or less, yet even more preferably during 15 seconds or less, yet even more preferably during 10 seconds or less, yet even more preferably during 5 seconds or less, such as from 1 to 5 seconds.

Drying is done until the product reaches a dry substance of from 2 to 15wt%, preferably from 3 to 14wt%, more preferably from 3 to 12wt%, even more preferably from 3 to 10wt%, yet even more preferably from 3 to 8wt%, yet even more preferably from 3 to 6wt%, yet even more preferably from 3 to 5wt%.

Drying is performed with a stream of heated gas (generally air, that may be low in oxygen), heated either by direct or indirect heating, such as for example by using an indirect gas burner. Although the drying gas can reach temperatures of about 200°C, preferably about 190°C, more preferably about 180°C (dryer inlet gas temperature), the product does not reach such high temperatures. Preferably the drying is done such that the average dryer outlet gas temperature is about 130°C or less, more preferably about 125°C or less, even more preferably 120°C or less, even more preferably 115°C or less, yet even more preferably 110°C of less, yet even more preferably 100°C or less. Preferably the temperature of the product remains at a temperature of 100°C or less, more preferably 95°C or less, even more preferably 90°C or less, yet even more preferably 85°C or less, yet even more preferably 80°C or less, yet even more preferably 70°C or less, for example from 80°C to 60°C or from 70°C to 60°C.

Preferably, the drying is performed with a method allowing low heat damage, such that the composition retains advantageous functional properties such as water binding and oil binding capacity for example. Preferably thus drying is done by convection in a flow of heated gas and drying may be done by fluidized bed, ring drying, air turbulence mill drying and the like.

Drying may also be done by freeze drying.

In a preferred embodiment, the drying step is performed at atmospheric pressure while forming small particles, such that drying is very efficient. Preferably thus the drying and the grinding steps are done substantially simultaneously. Such drying may be done in an air turbulence mill. Several types of air turbulence miss exist. They are generally referred to as turbulent air grinding or vortex air mills. Some of there are also named 'spin driers and grinders', and others also 'flash dryer and grinders'. Spin dryers and grinders and flash dryers and grinders basically dry and mill wet product in a very short period of time The rotor generally is positioned vertically relative to the outlet. It is preferred to use vertically positioned rotors, as they appear to use less energy.

Air turbulence mills, such as those known in the art from Atritor (Cell Mill), Hosokawa (Drymeister), Larsson (Whirl flash), Jäckering (Ultra Rotor), Rotormill, Görgens Mahltechnik (TurboRotor) or SPX may be used for drying and grinding in the present invention.

The air turbulence mill may comprise a classifier, which causes a separation of larger and smaller particles. The use of a classifier allows the larger particles to be returned to the grinder, while smaller particles are left through for further processing. It is noted that if needed, a further grinding step or sieving step may still be performed after drying in an air turbulence mill.

The present invention also relates to a composition comprising elastin, characterized in that:

a. It has a protein content of at least 60wt%
b. 90V% of the composition has a particle size of less than about 310$\mu$m
c. The composition is prepared by drying and grinding an animal skin residue during 30 minutes or less, preferably during 15minutes or less, preferably during 10 minutes or less, more preferably during 8 minutes or less, even more preferably during 5 minutes or less, even more preferably during 1 minute or less, yet even more preferably during 30 seconds or less, yet even more preferably during 25 seconds or less, yet even more preferably during 20 seconds or less, yet even more preferably during 15 seconds or less, yet even more preferably during 10 seconds or less, yet even more preferably during 5 seconds or less, such as from 1 to 5 seconds., while the animal skin residue remains at a temperature of 100°C or less, more preferably 95°C or less, even more preferably 90°C or less, yet even more preferably 85°C or less, yet even more preferably 80°C or less, yet even more preferably 70°C or less, for example from 80°C to 60°C or from 70°C to 60°C, further preferably wherein the drying and grinding is done simultaneously, such as in an air turbulence mill.

Preferably thus the present invention relates to a composition comprising elastin, obtainable by the process of the present invention.

As mentioned already, the composition of the present invention shows an improved heat stability meaning that when used in food or pet food applications where a heating step is done during the production process, such as a sterilization step for example, the composition of the present invention does not lose or loses only to a certain extent its functional properties, in particular water binding capacity, oils binding capacity, emulsification capacity; unlike many existing texturizers. Therefore, the composition of the present invention is suitable for use in such applications.

In a further aspect, the present invention relates to a food or pet food application comprising the composition of the present invention and further food and pet food ingredients. Preferably food applications are meat preparations, preferably sausages, in particular cooking sausages, liver patés or hams for example. Preferably pet food applications are wet pet food, extruded wet pet food products. As mentioned above the use of the present composition in food and pet food applications allows to improve the quality of food and pet food applications by influencing parameters such as water holding capacity (or cooking loss, how better the water holding capacity how less cooking loss) and syneresis. Further the texture of food and pet food applications may be improved by incorporation of the composition of the present invention, e.g. sliceability, hardness, consistency, elasticity and so on. Typically, the food or pet food application may comprise from about 0,5 to 10wt%, preferably from 1 to 5wt%, preferably 1 to 4wt%, more preferably 2 to 4wt% of the composition of the present invention.

In a further aspect, the present invention relates to the use of the present composition to fully or partially replace blood plasma in food applications or pet food applications, preferably in heat processed food and pet food applications. Preferably food applications are meat preparations, preferably sausages, in particular cooking sausages, liver patés or hams for example. Preferably pet food applications are wet pet food, extruded wet pet food products.

<u>Methods of measurement</u>

Dry particle size

5g of product is introduced in the Beckman Coulter particle size analyser and particle size is measured at 20°C.

Wet particle size

5g of product is put in 100ml water at 20°C and mixed for 30minutes with a magnetic stirrer. This aqueous composition is then introduced in the Beckman Coulter particle size analyser.

Water binding capacity

Preparation of buffer solution:

    1) 4.0 g $NaH_2PO_4$ and 70.0 g NaCl is dissolved in 1500 g demi-water
    2) the solution is corrected to pH 6.0 using 89.0 g 0.1 N NaOH
    3) the solution is diluted to 2000 g using demi-water.

Protocol 20 °C

    1) 2 g of protein is weighed in a pre-weighed centrifuge tube of 50 mL
    2) 8 g (or more in case of a high water binding capacity) of buffer is added dropwise to the protein at room temperature
    3) The centrifuge tube is shaken during 1 minute on a lab shaker
    4) Centrifugation for 10 min at 2000 g (= 3150 rpm on Allegra 6R centrifuge)
    5) Decantation of supernatant (buffer)
    6) Weighing of the pellet.

Protocol 76 °C

Similar to the protocol at 20 °C, but:

    1) the centrifuge tube is pre-heated to 76 °C
    2) the buffer is pre-heated to 80 °C

3) 5 g of protein is used
4) 20 g of buffer is added
5) after shaking, the protein-buffer mixture is heated at 76 °C for 20 min.

Water binding capacity WBC (%) is calculated as follows:

$$[(weight\ pellet - weight\ dry\ protein)\ /\ weight\ dry\ protein]\ x\ 100$$

Oil binding capacity

Protocol 20 °C

1. 5 g of protein is weighed in a pre-weighed centrifuge tube of 50 mL
2. 10 g (or more in case of a high oil binding capacity) of sunflower oil (Vandemoortele) is added dropwise to the protein at room temperature
3. The centrifuge tube is shaken during 1 minute on a lab shaker - visual check that all protein powder is in contact with oil (no dry particles)
4. Centrifugation for 10 min at 2000 g (= 3150 rpm on Allegra 6R centrifuge)
5. Decantation of supernatant (oil)
6. Weighing of the pellet.

Protocol 76 °C is similar to the protocol at 20 °C, but:

1. the centrifuge tube is pre-heated to 76 °C
2. the oil is pre-heated to 80 °C
3. 15g of oil is added
4. after shaking, the protein-oil mixture is heated at 76 °C for 10-15 min.

Oil binding capacity OBC (%) is calculated as follows:

$$[(weight\ pellet - weight\ dry\ protein)\ /\ weight\ dry\ protein]\ x\ 100$$

Emulsification capacity

Preparation of protein solutions and SDS solution:

0.15 % protein solutions:

1. 4.0 g NaH2PO4 and 70.0 g NaCl is dissolved in 1500 g demi-water
2. the solution is corrected to pH 6.0 using 89.0 g 0.1 N NaOH
3. the solution is diluted to 2000 g using demi-water
4. preparation of a 0.15% protein solution/suspension in the buffer solution of step 3.

0.1 % SDS solution:
1.00 g SDS is dissolved in 1000 g demi-water.

Protocol:

1. The solution/suspension of 0.15 % protein in the phosphate buffer (pH 6) containing 3.5 % NaCl is stirred for 1 h at room temperature
2. 8 volumes of the protein solution/suspension of step 1. (100 mL) is mixed with 2 volumes sunflower oil (Vandemoortele) (25 mL)

3. An emulsion is prepared by homogenization of the mix of step 2. using a Ultra-Turrax homogenizer: 1 min. at 12000 rpm (recipient: 250 mL Schott bottles)

4. 5-10 seconds after homogenization, 250 μL of the bottom of the emulsion is added to 25 mL of the 0.1 % SDS solution (recipient: 100 mL Schott bottles)

5. The solution is shaked/mixed for 0.5 min, Turrax-mixing (4000 rpm); measurement of the absorbance 3 min. after mixing

6. Measurement of the absorbance at 500 nm.

7. Steps 4., 5. and 6. are repeated 10 min after homogenization.

The present invention will be illustrated in the following non-limiting examples.

Example 1

Pig skin received from slaughterhouses was used to produce gelatin (acid process), 3 gelatin extraction broth were produced. The pig skin residue remaining after the 3rd extraction broth was removed, was further processed. The pig skin residue had a moisture content of 48.5% ("wet product") and was dried to a target moisture of 5%.

Drying was done as follows: an air turbulence mill was operated such that the average outlet air temperature was 124°C. An average inlet air temperature of 192°C was used. The mill mean load was controlled to remain at about 67 Amps. The feed is back mixed at a ration 10 wet product : 1,5 dry product (having a moisture content of 5%). Drying time was from 3 to 5 seconds.

Example 2: Production of cooking sausages

The composition of example 1 was used to produce cooking sausages and compared to a reference sausages not comprising the composition of example 1.

275g of meat trimmings, 175g of mechanically deboned pork meat, 200g of ice, 1,8g nitrite curing salt were blended together and grinded. After 2 minutes of grinding the composition of example 1 was added (10g) (note for the reference sausage, no product is added at this point). Grinding was done until a homogeneous batter was obtained, temperature was 5°C. Further, 200g of pork back fat, 200g of ice and spices were added (0,5g sugar; 0,2g white pepper; 0,05 g mace; 0,05 cardamom; 0,05g ascorbate; 0,4g glutamate) and further grinded to obtain a homogeneous batter at a temperature of 14°C. The batter was used to fill sausage casings and the casings were cooked (180 minutes at 75°C). After cooking, the sausages were allowed to cool down until room temperature.

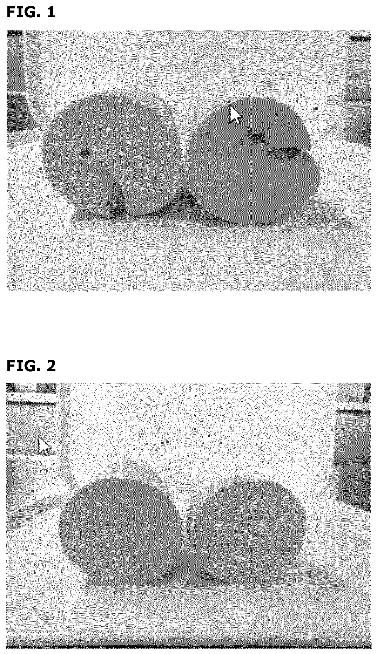

The product appearance is shown in Figures 1 and 2. Fig. 1 is a reference picture. Fig. 2 is a picture of sausage containing composition according to example 1.

The water binding capacity of the sausages is improved by adding the product according to example 1: cooking loss (in weight) is measured for the sausages. The reference sausage shows a cooking loss of more than 8% whilst the sausage with the product of example 1 shows a cooking loss of about 6% only. Thus a reduction of the cooking loss is obtained by the use of the composition of example 1, according to the present invention.

**Claims**

1. An animal skin residue composition comprising elastin, **characterized in that** it has

   a. A protein content of at least 60wt%
   b. 90V% of the composition has a particle size of less than about 310μm and comprises 3,5wt% or less of hydroxyproline.

2. The composition of claim 1 further **characterized in that** it comprises from about 0,2 to about 3,5wt% of hydroxyproline.

3. The composition of claim 1 or 2 further **characterized in that** it has a pH of from 4 to 5,5.

4. The composition according to claim 1, wherein the composition is prepared by drying and grinding an animal skin residue during less than 15 minutes, while the animal skin residue remains at a temperature of 100°C or less.

5. The composition of claim 4, wherein the drying is done by freeze drying or flash drying.

6. The composition of claim 4, wherein the drying and grinding is done simultaneously.

7. The composition of any one of the above claims, further **characterized in that** it has a collagen content of 12 wt% or less, preferably from 2 to 8 wt%.

8. The composition of any one of the previous claims further **characterized in that** it has a water binding capacity at 20°C of 200 to 500%.

9. The composition of any one of the previous claims further **characterized in that** it has an oil binding capacity at 20°C of 110 to 350%.

10. The composition of any one of the previous claims further **characterized in that** it has an emulsification capacity of 60 to 95%.

11. A process for preparing a composition according to any-one of the above claims, comprising the steps of:

   a. Providing an aqueous slurry of animal skin residue material, and
   b. Drying the animal skin residue, and
   c. Grinding the dried animal skin residue, and
   d. Optionally sieving and
   e. Collecting the composition

12. The process according to claim 11 wherein the drying is done by freeze drying.

13. The process according to claim 11 wherein drying and grinding are done simultaneously, preferably in an air turbulence mill.

14. Use of the composition of claims 1-10, in food or pet food applications as partial or full blood plasma replacer.

15. A food or pet food application comprising, preferably from 0,5 to 10wt%, of the composition of claims 1-10 and further food or pet food ingredients.

**Patentansprüche**

1. Tierhautrückstandszusammensetzung, die Elastin umfasst, **dadurch gekennzeichnet, dass**

   a. sie einen Proteingehalt von mindestens 60 Gew.-% aufweist
   b. 90 Vol.-% der Zusammensetzung eine Partikelgröße von weniger als etwa 310 $\mu$m aufweist und 3,5 Gew.-% oder weniger Hydroxyprolin enthält.

2. Zusammensetzung nach Anspruch 1, ferner **dadurch gekennzeichnet, dass** sie ungefähr 0,2 bis ungefähr 3,5 Gew.-% Hydroxyprolin enthält.

3. Zusammensetzung nach Anspruch 1 oder 2, ferner **dadurch gekennzeichnet, dass** sie einen pH-Wert von 4 bis 5,5 aufweist.

4. Zusammensetzung nach Anspruch 1, wobei die Zusammensetzung durch Trocknen und Mahlen eines Tierhautrückstands während weniger als 15 Minuten hergestellt wird, während der Tierhautrückstand bei einer Temperatur von 100 °C oder weniger verbleibt.

5. Zusammensetzung nach Anspruch 4, wobei das Trocknen durch Gefriertrocknen oder Schnelltrocknen erfolgt.

6. Zusammensetzung nach Anspruch 4, wobei das Trocknen und Mahlen gleichzeitig erfolgt.

7. Zusammensetzung nach einem der vorhergehenden Ansprüche, ferner **dadurch gekennzeichnet, dass** sie einen Kollagengehalt von 12 Gew.-% oder weniger, bevorzugt von 2 bis 8 Gew.-%, aufweist.

**8.** Zusammensetzung nach einem der vorhergehenden Ansprüche, ferner **dadurch gekennzeichnet, dass** sie eine Wasserbindungsfähigkeit bei 20 °C von 200 bis 500 % aufweist.

**9.** Zusammensetzung nach einem der vorhergehenden Ansprüche, ferner **dadurch gekennzeichnet, dass** sie eine Ölbindungsfähigkeit bei 20 °C von 110 bis 350 % aufweist.

**10.** Zusammensetzung nach einem der vorhergehenden Ansprüche, ferner **dadurch gekennzeichnet, dass** sie eine Emulgierfähigkeit von 60 bis 95 % aufweist.

**11.** Verfahren zum Herstellen einer Zusammensetzung nach einem der vorhergehenden Ansprüche, umfassend die Schritte:

a. Bereitstellen einer wässrigen Aufschlämmung aus Tierhautrückstandsmaterial, und
b. Trocknen des Tierhautrückstands, und
c. Mahlen des getrockneten Tierhautrückstands, und
d. optional Sieben und
e. Auffangen der Zusammensetzung.

**12.** Verfahren nach Anspruch 11, wobei das Trocknen durch Gefriertrocknen erfolgt.

**13.** Verfahren nach Anspruch 11, wobei das Trocknen und Mahlen gleichzeitig erfolgen, bevorzugt in einer Luftturbulenzmühle.

**14.** Verwendung der Zusammensetzung nach den Ansprüchen 1 bis 10 in Lebensmittel- oder Tierfutteranwendungen als teilweiser oder vollständiger Blutplasmaersatz.

**15.** Lebensmittel- oder Tierfutteranwendung, die bevorzugt 0,5 bis 10 Gew.-% der Zusammensetzung nach den Ansprüchen 1 bis 10 und ferner Lebensmittel- oder Tierfutterzutaten enthält.

**Revendications**

**1.** Composition de résidu de peau animale comprenant de l'élastine, **caractérisée en ce que**

a. elle a une teneur en protéines d'au moins 60 % en poids
b. 90 % en volume de la composition a une taille de particule inférieure à 310 μm environ et comprend 3,5 % en poids ou moins d'hydroxyproline.

**2.** Composition de la revendication 1, **caractérisée en outre en ce qu'**elle comprend d'environ 0,2 à environ 3,5 % en poids d'hydroxyproline.

**3.** Composition de la revendication 1 ou 2, **caractérisée en outre par** un pH compris entre 4 et 5,5.

**4.** Composition selon la revendication 1, dans laquelle la composition est préparée par séchage et broyage d'un résidu de peau animale pendant moins de 15 minutes, tandis que le résidu de peau animale reste à une température de 100 °C ou moins.

**5.** Composition de la revendication 4, dans laquelle le séchage est effectué par lyophilisation ou séchage éclair.

**6.** Composition de la revendication 4, dans laquelle le séchage et le broyage sont effectués simultanément.

**7.** Composition de l'une quelconque des revendications précédentes, **caractérisée en outre par** une teneur en collagène de 12 % en poids ou moins, de préférence de 2 à 8 % en poids.

**8.** Composition de l'une quelconque des revendications précédentes, **caractérisée en outre par** une capacité de rétention d'eau à 20 °C de 200 à 500 %.

**9.** Composition de l'une quelconque des revendications précédentes, **caractérisée en outre par** une capacité de rétention d'huile à 20 °C de 110 à 350 %.

**10.** Composition de l'une quelconque des revendications précédentes, **caractérisée en outre par** une capacité d'émulsification de 60 à 95 %.

**11.** Processus de préparation d'une composition selon l'une quelconque des revendications précédentes, comprenant les étapes de :

> a. Fourniture d'une boue aqueuse de matière de résidu de peau animale, et
> b. Séchage du résidu de peau animale, et
> c. Broyage du résidu de peau animale séché, et
> d. Éventuellement, tamisage et
> e. Collecte de la composition.

**12.** Processus selon la revendication 11, dans lequel le séchage est effectué par lyophilisation.

**13.** Processus selon la revendication 11, dans lequel le séchage et le broyage sont effectués simultanément, de préférence dans un broyeur à turbulence d'air.

**14.** Utilisation de la composition des revendications 1 à 10, dans des applications alimentaires ou pour animaux de compagnie, en tant que substitut partiel ou total du plasma sanguin.

**15.** Application alimentaire ou pour animaux de compagnie comprenant de préférence de 0,5 à 10 % en poids de la composition des revendications 1 à 10, ainsi que d'autres ingrédients alimentaires ou pour animaux de compagnie.

**FIG. 1**

**FIG. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2575496 A

**Non-patent literature cited in the description**

- **J KANTA** ; **V HUDEC** ; **R BARTA** ; **V VELEBNY**. *Elastin powder produced for cosmetic purposes does not affect formation of granulation tissue*, 1989, vol. 32 (4), 403-406